# EUROPEAN PATENT SPECIFICATION

(11) **EP 0 885 642 B1**
(45) Date of publication and mention of the grant of the patent: **14.02.2001**
(21) Application number: 97306050.2
(22) Date of filing: 08.08.1997
(51) Int. Cl.: B01D 25/176

(54) **Tool for the assembly of the cylindrical parts of two flanged bushings**
Montagewerkzeug zum Verbinden der zylindrischen Teile zweier Flanschbuchsen
Outil d'assemblage des parties cylindrique de deux manchons

(30) Priority: 11.06.1997 GB 9712099
(43) Date of publication of application: 23.12.1998
(73) Proprietor: Madison Filter 981 Limited, Blackburn, Lancashire BB2 6AY (GB)
(72) Inventor: Edwards, James Christopher, Accrington, Lancashire, BB5 2HA (GB); Lydon, Richard Patrick, Handbridge, Chester CH4 7BP (GB)
(74) Representative: Goodwin, Mark

(56) References cited:
- EP-A- 0 540 326
- WO-A-93/18839
- WO-A-95/07743
- FR-A- 1 593 016
- GB-A- 2 088 231

## Description

This invention relates to a fitting tool for fitting barrel necks in filter press assemblies.

Barrel necks are generally spool-shaped two part assemblies made from flexible but robust polyethylene or a blend or polypropylene with another polymer, each part comprising a disc-shaped flange with a central aperture and an integrally formed cylindrical portion, the cylindrical portions of the parts being dimensioned so that one can fit within the other. To secure the parts together, the cylindrical portion of one part has a ridge which fits into a correspondingly located groove in the cylindrical portion of the other part.

When assembled, the flanges retain filter cloth edges in the region of the barrel neck, about an aperture in a filter plate, the aperture being lined by the cylindrical portions of the barrel neck parts. The barrel necks each define a passage for entry of unfiltered liquor into serially disposed filtration chambers, the out flow of filtered liquor being through the filter cloths and associated apparatus. The residual filter cake is retained by the filter cloths and must be removed from time to time. Also, filter cloths which are damaged or clogged by the entry of filtrate material into the pores of the filter cloth must be removed for replacement or cleaning. Thus the barrel neck provided for each filter assembly must be removed to allow removal and replacement of the filter cloths, the edges of which are retained by the flanges of the barrel neck assembly.

Press filter installations commonly include a multiplicity of filter plate assemblies, which when the press is released, may be spaced apart by separations in the order of 300 mm, as many as 80 or so such filter plate assemblies being provided in an installation.

To dismantle each barrel neck, a worker has to pull each of the pairs of barrel neck parts asunder, to separate the parts, then carry out the intended operation with the filter cloths or other parts of the press plate assembly and then having replaced or relocated all components, push the barrel neck parts together again. This may not seem to be difficult, but in the constricted environment, it is difficult to obtain the manipulation room and leverage necessary to perform the re-assembly task manually.

The size of filter plates have continued to increase from 0.8 to 2m², and even up to 6m² in some cases. This has resulted in the centre feed holes in the plates becoming further away from the operator, creating problems associated with joining the plates using barrel neck connections.

It is therefore an object of the invention to provide a tool whereby at least the re-assembly of a barrel neck can be effected without substantial restraint by the constricted environment existing in most filter presses.

According to the invention a tool for fitting a barrel neck in a filter press comprises a first pressure member for exerting pressure on a flange member of a first barrel neck part, a second pressure member for exerting pressure on a flange of a second barrel neck part, said first pressure member having associated means for retaining said first pressure member relative to said second pressure member and cam means operable to exert a load forcing said pressure members towards each other, and thus causing closing movement of the barrel neck parts.

Preferably said cam means is actuatable by lever means, which may be manual, or operated by fluid pressure.

Said second pressure member may be connected to a fixed handle which enables the second pressure member to be held in place during operation of the tool.

The retaining means may comprise a slot in the second pressure member in which may be received a catch on a rod extending from the first pressure member, through the barrel neck assembly.

The cam means may be in the form of an off-axis protrusion formed in the base of a pivoted lever, so that the cam means can press against the first pressure member when the lever is rotated on its respective pivot.

The first and second pressure members may be in the form of discs, of a diameter sufficient to bridge the central aperture of the respective barrel neck parts and bear on the flanges surrounding the respective apertures.

A preferred embodiment of barrel neck assembly tool according to the invention will now be described by way of example with reference to the accompanying drawings, wherein:-
Fig. 1(a) is a perspective view of one part of a barrel neck assembly tool according to the invention;
Fig.1(b) is a perspective view of a complementary part of the barrel neck assembly tool of fig.1;
Fig.2 is a sectional view of the tool of figs.1(a) and (b) in conjunction with a barrel neck assembly; and
Fig.3 is a fragmentary sectional view similar to fig.2 showing the tool at the phase where maximum pressure is exerted on the barrel neck assembly.

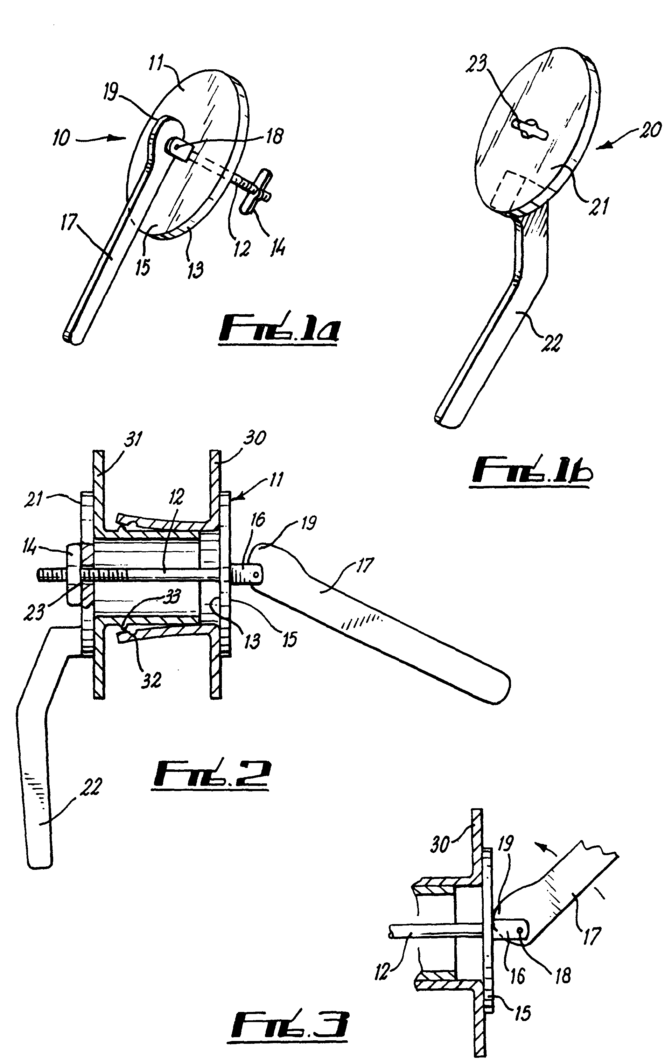

A barrel neck assembly tool according to the invention comprises two parts, one of which is shown in Fig.1(a) and the other in Fig.1(b). Fig.1(a) shows a part 10 comprising a pressure disc 11, which is of a diameter to bridge the central aperture of a barrel neck assembly in a filter press and bear on the flange of the assembly surrounding the central aperture. A shaft 12 extends from the centre of the flange contacting surface 13 of the disc 11 and carries a catch 14 which is rotatable on the shaft 12 and can be slid axially along the shaft 12.

The opposite face 15 of the disc 11 carries, e.g. as a continuation of shaft 12, a yoke 16 in which is pivoted the inner end of an actuation lever 17. The said inner end is mounted eccentrically with respect to the pivot axis 18, so that a cam portion 19 is provided of greater radius from the axis 18 than the remainder of the inner end of the actuation lever.

Fig.1(b) shows the other complementary part 20 of the tool. This comprises a second pressure disc 21 of similar dimensions to the disc 11. This disc is carried on a fixed handle 22 and has a central keyed slot 23. This is shaped to allow passage of the shaft 12 and catch 14 through the slot in one position of the catch 14, the catch 14 then being rotated to prevent retraction of the shaft 12 from the disc 21.

Fig.3 illustrates the effect of cam 19, when the handle 17 is rotated from the fig.2 position, upwardly in the figures, the cam 19 bears on the pressure disc 11 and pushes this and thus an associated barrel neck part flange 30 axially towards the opposing pressure disc 21 and the other barrel neck part 31. The pressure thus exerted pushes the parts of the barrel neck assemblies full together, for example, causing a rib 33 on one part to rest on a groove 32 on the other part.

In use, a barrel neck is loosely assembled and partially pushed home manually. One part 10 of the tool is inserted to one side (and to one side of the intervening filter plate) and the shaft 12 pushed through the barrel neck aperture with the pressure plate 11 applied to the flange 30 of the respective barrel neck part. The second part 20 is then inserted to the other side of the filter plate and the slot 23 fitted over the end of shaft 12 and the catch 14 and then positioned in contact with the other barrel neck part 31, the catch 14 being tightened for example by means of a screw thread on shaft 12.

The respective handles 17,22 are turned into alignment and then the handle 17 rotated to bring the cam surface 19 to bear on the disc 11 so that the parts of the barrel neck assembly are forced together with a force equivalent to the mechanical advantage conferred by the ratio of the length of the lever 17 to the separation of the cam surface 19 from pivot 18. This enables a force substantially in excess of the closure force which could be exerted manually in a restricted environment to be exerted, so that the barrel neck assembly can be relatively easily and quickly assembled.

Variations can be made to the tool within the scope of the invention. The pressure members need not be in the form of discs for example, and the tool may be made of any suitable material including wood, robust plastics materials and metal, especially steel. The tool can also be used to secure a press stud into a groove on the face of a filter plate or in the neck itself, for the cloth dressing method as described in WO 96/24423.

In a major variation, the closure force may be exerted by a hydraulic ram acting in the direction of the axis of the shaft 12.

## Claims

1. A tool for fitting a barrel neck in a filter press, characterised in that it comprises a first pressure member (11) for exerting pressure on a flange member (30) of a first barrel neck part, a second pressure member (21) for exerting pressure on a flange member (31) of a second barrel neck part, further characterised in that said first pressure member (11) has associated means (12,14) for retaining said first pressure member (11) relative to said second pressure member (21) and cam means (19) operable to exert a load forcing said pressure members towards each other and thus causing closing movement of the barrel neck parts.

2. A tool according to claim 1, characterised in that the cam means (19) is actuable by lever means (17).

3. A tool according to claim 1, characterised in that said second pressure member (21) is connected to a fixed handle (22) which enable the second pressure member (21) to be held in place during operation of the tool.

4. A tool according to claim 1, characterised in that the retaining means comprise a slot (23) in said second pressure member (21), wherein may be received a catch (14) on a rod (12) extending from said first pressure member (11) though the barrel neck assembly.

5. A tool according to claim 1, characterised in that said cam means (19) is in the form of an off-axis protrusion formed in the base of a pivoted lever (17) so that said cam means (19) can press against the first pressure member (11) when the lever (17) is rotated on its respective pivot.

6. A tool according to claim 1, wherein said first and second pressure members (11,21) are in the form of discs, of a diameter sufficient to bridge the central aperture of the respective barrel neck parts and bear on the flanges (30,31) surrounding said respective apertures.

7. A tool according to claim 1, wherein the cam means (19) is operated by a hydraulic ram acting in the closure direction of the barrel neck.

8. A tool according to claim 1 adapted to fit a press stud into the surface of a filter plate.

## Patentansprüche

1. Werkzeug zur Anbringung eines Zylinderhalses in einer Filterpresse,
dadurch gekennzeichnet, daß das Werkzeug ein erstes Druckglied (11) zum Ausüben von Druck auf ein Flanschelement (30) eines ersten Zylinderhalsteiles und ein zweites Druckglied (21) zum Ausüben von Druck auf ein Flanschelement (31) eines zweiten Zylinderhalsteiles umfaßt,
ferner dadurch gekennzeichnet, daß das erste Druckglied (11) eine zugehörige Vorrichtung (12, 14) zum Festhalten des ersten Druckgliedes (11) relativ zu dem zweiten Druckglied (21) sowie eine Nockenvorrichtung (19) aufweist, die derart betätigbar ist, daß sie eine Kraft ausübt, die die Druckglieder in Richtung zueinander drückt und dadurch eine Schließbewegung der Zylinderhalsteile bewirkt.

2. Werkzeug nach Anspruch 1,
dadurch gekennzeichnet, daß die Nockenvorrichtung (19) durch eine Hebelvorrichtung (17) betätigbar ist.

3. Werkzeug nach Anspruch 1,
dadurch gekennzeichnet, daß das zweite Druckglied (21) mit einem fest angeordneten Griff (22) verbunden ist, mittels dessen das zweite Druckglied (21) während der Betätigung des Werkzeuges in seiner Lage zu halten ist.

4. Werkzeug nach Anspruch 1,
dadurch gekennzeichnet, daß die Haltevorrichtung einen in dem zweiten Druckglied (21) ausgebildeten Schlitz (23) umfaßt, von dem eine Sperre (14) aufzunehmen ist, die an einer Stange (12) angeordnet ist, welche sich von dem ersten Druckglied (11) durch die Zylinderhals-Anordnung erstreckt.

5. Werkzeug nach Anspruch 1,
dadurch gekennzeichnet, daß die Nockenvorrichtung (19) die Form eines achsenentfernten Vorsprunges hat, der an der Basis eines Schwenkhebels (17) ausgebildet ist, so daß die Nockenvorrichtung (19) gegen das erste Druckglied (11) drücken kann, wenn der Hebel (17) um seine jeweilige Drehachse gedreht wird.

6. Werkzeug nach Anspruch 1,
bei dem das erste und das zweite Druckglied (11, 21) in Form von Scheiben ausgebildet sind, deren Durchmesser groß genug ist, um die Mittelöffnung der jeweiligen Zylinderhalsteile zu überbrücken und auf den die jeweiligen Öffnungen umgebenden Flanschen (30, 31) aufzuliegen.

7. Werkzeug nach Anspruch 1,
bei dem die Nockenvorrichtung (19) von einem hydraulischen Arbeitszylinder betätigt wird, der in der Schließrichtung des Zylinderhalses wirksam ist.

8. Werkzeug nach Anspruch 1,
das geeignet ist, einen Druckstift in die Oberfläche einer Filterplatte einzusetzen.

## Revendications

1. Outil pour adapter un col de fût dans un filtre-presse, caractérisé en ce qu'il comprend un premier organe de pression (11) pour exercer une pression sur une pièce à rebord (30) d'une première partie de col de fût, un second organe de pression (21) pour exercer une pression sur une pièce à rebord (31) d'une seconde partie de col de fût, également caractérisé en ce que ledit premier organe de pression (11) a des moyens de rétention (12, 14) associés pour retenir ledit premier organe de pression (11) par rapport audit second organe de pression (21) et des moyens (19) en forme de came actionnables de manière à exercer une pression rapprochant lesdits organes de pression l'un de l'autre et provoquant ainsi un mouvement de fermeture des parties de col de fût.

2. Outil selon la revendication 1, caractérisé en ce que les moyens en forme de came (19) sont actionnables par des moyens en forme de levier (17).

3. Outil selon la revendication 1, caractérisé en ce que ledit second organe de pression (21) est connecté à une poignée fixe (22) qui permet au second organe de pression (21) d'être maintenu en place pendant la manipulation de l'outil.

4. Outil selon la revendication 1, caractérisé en ce que les moyens de rétention comprennent une fente (23) dans ledit second organe de pression (21), dans laquelle peut être reçu un dispositif d'arrêt (14) placé sur une tige (12) s'étendant à partir dudit premier organe de pression (11) à travers l'assemblage de col de fût.

5. Outil selon la revendication 1, caractérisé en ce que lesdits moyens en forme de came (19) ont la forme d'une excroissance décentrée formée dans la base d'un levier pivotant (17) de façon à ce que lesdits moyens en forme de came (19) puissent exercer une pression sur le premier organe de pression (11) lorsque le levier (17) est mis en rotation autour de son pivot respectif.

6. Outil selon la revendication 1, selon lequel lesdits premier et second organes de pression (11, 21) sont en forme de disques, d'un diamètre suffisant pour couvrir l'ouverture centrale des pièces de col de fût respectives et reposer sur les rebords (30, 31) entourant les ouvertures respectives.

7. Outil selon la revendication 1, selon lequel les moyens en forme de came (19) sont actionnés par un vérin hydraulique agissant dans la direction de fermeture du col de fût.

8. Outil selon la revendication 1, adapté à l'installation d'un goujon de pression dans la surface d'une plaque filtrante.
